# EUROPEAN PATENT SPECIFICATION

(11) **EP 0 526 103 B1**
(45) Date of publication and mention of the grant of the patent: **23.09.1998**
(21) Application number: 92306741.7
(22) Date of filing: 23.07.1992
(51) Int. Cl.: H04M 3/50, H04Q 3/66

(54) **Method of serving calls in a network having a plurality of call distributor serving centres**
Verfahren zur Bearbeitung von Anrufen in einem Netz mit mehreren Bearbeitungszentren zur Anrufverteilung
Procédé de traitement d'appels dans un réseau ayant plusieurs centres de distribution d'appels

(30) Priority: 30.07.1991 US 738003; 27.09.1991 US 766870
(43) Date of publication of application: 03.02.1993
(73) Proprietor: AT&T Corp., New York, NY 10013-2412 (US)
(72) Inventor: Kerrigan, Daniel Collins, Downers Grove, Illinois 60516 (US); Otto, Mary Rita, Lisle, Illinois 60532 (US)
(74) Representative: Buckley, Christopher Simon Thirsk

(56) References cited:
- US-A- 4 953 204
- US-A- 5 020 095
- BELL LABORATORIES RECORD vol. 53, no. 4 , April 1975 , MURRAY HILL, NEW JERSEY US pages 197 - 202 R.W.KAHN 'REDESIGNED ACD IMPROVES DIRECTORY-ASSISTANCE SERVICE'
- IEEE INTERNATIONAL CONFERENCE ON COMMUNICATIONS 86 SESSION 1.1. vol. 1/3 , 22 June 1986 , TORONTO(CA) pages 2 - 6 G.W.GAWRYS ET AL 'ISDN: INTEGRATED NETWORK/ PREMISES SOLUTIONS FOR CUSTOMER NEEDS'
- MIDCON 84 CONFERENCE RECORD 8/1 11 September 1984 , DALLAS(US) pages 1 - 4 J.C.SHAH ET AL 'OVERFLOW TRAFFIC CHARACTERISTICS IN AUTOMATIC CALL DISTRIBUTION SYSTEMS'

## Description

This invention relates to methods of serving calls in a network having a plurality of call distributor serving centers, and to call distributors.

Businesses frequently serve their customers through the use of automatic call distributor (ACD) answering sites which allows incoming calls, for example, for placing orders, to be routed to one of a plurality of agent positions for handling each call. In many cases, it is advantageous for a business to have several different ACD answering sites separated from each other for handling the overall needs of the business. The ACD sites may be separated from each other in order to draw on different populations for staffing the site or to be responsive to the special requirements of different regulatory agencies which control different areas of the country. When a single customer has several ACD sites, it is desirable to create an arrangement whereby overflow traffic to one of these ACD sites is handled by the agents of one of the other ACD sites that may be less busy.

Arrangements for handling such overflow exist in present systems such as the system described in M.P. Taylor et al.: U.S. Patent 4,400,587 in which calls, whose expected delay before service exceeds a threshold, are routed to another automatic call distributor via dedicated trunks or via the public switched telephone network. A problem with such an arrangement is that the control of rerouting of traffic is performed on the basis of an off/on trigger, not on the basis of a call by call examination of the expected delay in serving a call. For some situations such as night transfer, this is satisfactory but for the handling of overflow traffic, the result is that calls are answered with widely varying delay in the answer, with the result that some of the calls that are delayed excessively are abandoned, and others answered out of turn. A second problem is that these systems reroute calls after having first delayed them, thus causing such calls rerouted calls to encounter excessive delay.

Some systems are arranged to communicate only with similar types of ACD switches. For example, a Rockwell Galaxy® ACD may communicate with another Galaxy ACD via control messages to determine if the second ACD is capable of accepting additional traffic. However, if the second ACD is not a Rockwell ACD but is, for example, an ACD served directly by an AT&T 5ESS® switch, no arrangements have been made for communications between such switches. If the ACDs are connected by dedicated trunks, an expensive arrangement for handling occasional overflow traffic, then the availability of these trunks can be used as an indicator of the activity of other ACDs. The control messages only give an indication at one point in time of the ability of the other ACD to accept traffic. Further, the control messages require the use of a dedicated trunk, which is expensive.

These arrangements are particularly awkward when several ACDs attempt to handle overload that may exist in any one or more of the ACDs. First, any ACD must have a signaling trunk to any other ACD to which it may send traffic. Second, the time required for transmitting an inquiry message and receiving a response message is on the order of ten seconds so that if several different inquiries need to be made, a great deal of time is lost and a large amount of overflow traffic has been accumulated.

Accordingly, a problem in the prior art is that there is no good way of sharing overload among a group of ACD sites that is cost effective, allows for quick response to overload, and that is flexible and easily controllable by ACD system administrators.

A further problem exists if one or more of the ACD sites is a site having limited capability for program modification. This type of situation will occur. for example, if the bulk of the sites are made by one manufacturer and are adapted through program means to solve the problem stated above, but one or more of the sites, perhaps already being in place, are made by another manufacturer whose products are not so adapted.

According to one aspect of this invention there is provided a method as claimed in claim 1.

According to another aspect of this invention there is provided a call distributor as claimed in claim 11.

The presence of overflow traffic is detected in the queues for storing incoming traffic to an ACD and, upon the detection of overflow, calls are rerouted to other ACDs of a group serving a specific customer; in a departure from the prior art, the calls are rerouted on the basis of information concerning traffic that has been rerouted from the target ACD to the sending ACD. Advantageously, only the rerouted calls and no special messages are transmitted between ACD sites.

Overflow in a sending ACD is determined by estimating the amount of time that an incoming call will be in a queue before being served by an ACD agent. In one specific implementation of this invention, this estimate is based on the number of calls in the queue and a running average, constantly updated. of the amount of time that agents spend on each call. Advantageously, such an estimate is more accurate than an alternative, the age of the oldest call in the queue; for example, that oldest call may be the first of a large block of calls which enter the system almost simultaneously so that this first call may be in the queue for only a short time but the last call of that block and any new calls will in the queue for a long time before they are processed.

If the estimated time that a call is expected to be in the queue before the call is answered by an agent exceeds a parameter, preferably controllable by the ACD system administrator, an attempt is made to reroute the call to one of the other ACD answering sites of the customer. In selecting an alternate answering site, the sending ACD site queries its own incoming traffic queues for traffic rerouted from other answering sites in a predetermined but changeable order. If the amount of traffic in the queue of a candidate alternate answering site has fewer than a predetermined number of entries, then calls are rerouted to that alternate answering site. In one specific implementation, calls are rerouted only if that queue is actually empty.

If calls are rerouted to an alternate answering site and the alternate answering site cannot accept such calls, i.e., its calls would encounter more than the upper limit of delay if such a call were accepted, the alternate answering site reroutes the call back to the original ACD over a public switched network using a special directory number. An ACD which receives a call having this special directory number, recognizes that no calls can be overflowed to the sending ACD until all overflowed traffic from the alternate ACD serving site has been handled. Advantageously, by using a different directory number for rejected calls as opposed to overflowed calls, we avoid the situation of repeatedly or further rerouting rejected calls; further, since these rejected calls cannot be further rejected but must enter the overflow queue for the rejecting ACD site, we ensure that the sending ACD is properly informed that the target alternate ACD cannot accept traffic at this time.

The second problem stated above is solved by assigning one of the nodes which is being adapted by program means to act as a mother node and to accept all overflow traffic from an ACD which has not been adapted,

labeled for simplicity a foreign node. If, as is usually the case, the foreign node is capable of rejecting traffic by overflowing the traffic then the mother node can send its own overflow traffic to the foreign node as described above; if too many calls are overflowed by the foreign node, this is an indication to the mother node that overflow traffic should not be routed to the foreign node until the foreign node is again able to accept such overflow traffic. If the mother node receives overflow traffic from the foreign node, it may either process such overflow traffic in the ACD of the mother node or it may overflow the overflow traffic from the foreign node to one of the other adapted nodes. If this other node rejects the call, then the call is returned to the mother node which, since the foreign node is assumed not to be adapted to receive reject traffic and is not able to reaccept traffic which has already been overflowed. The traffic from the foreign node which has been overflowed to one of the other nodes but rejected is traffic, which if it had originated from one of the other nodes, would have to be handled by that other node. The mother node is engineered to accommodate this overflow traffic as well as other traffic.

Queues are provided in the mother node not only for overflowing traffic from a foreign node but also for storing overflowed traffic from the foreign node that was sent to one of the other nodes and rejected therein. Advantageously, the priority for traffic in such nodes may be adjusted accordingly in priority. Also, for calls overflowed to the foreign node, a program in the mother node provides the intelligent routing to the mother node team or the appropriate alternate site.

Separate queues can also be provided in the alternate nodes for traffic overflowed from the foreign node, via the mother node, to the alternate node. Such separate queues aid in system administration.

### Brief Description of the Drawing

FIGs. 1 and 2 illustrate one of a group of four or more automatic call distributors arranged to overflow traffic within the group, the particular call distributor being arranged to act as a mother node for one of the call centers which is a foreign node;
FIG. 3 is a flow diagram of the processing of an incoming call to one of these automatic call distributors other than the foreign node;
FIG. 4 is a flow diagram illustrating the processing of a call overflowed from another ACD which is not a foreign node;
FIG. 5 is a flow diagram of the processing of a rejected call which was not overflowed from a foreign node;
FIG. 6 is the processing of a call in a node other than the mother node of a call overflowed from the foreign node via the mother node;
FIG. 7 is a flow diagram of the processing of a call overflowed from the foreign node via the mother node and rejected by one of the alternate nodes; and
FIG. 8 is a flow diagram of the processing in the mother node of a call overflowed from a foreign node.

### Detailed Description

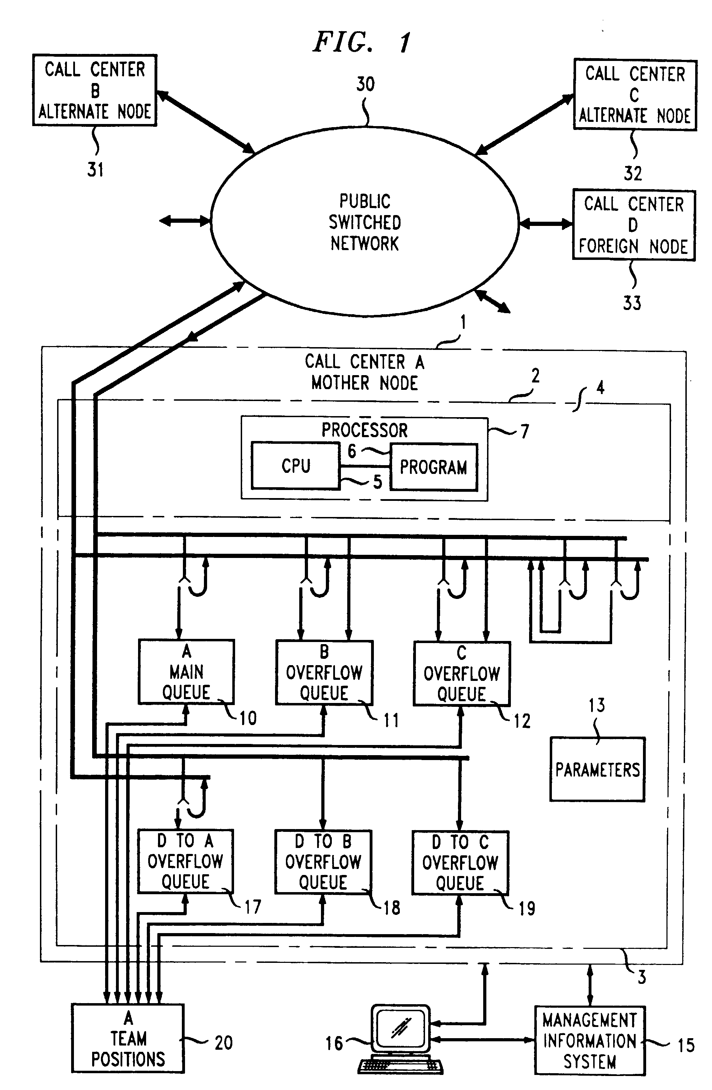

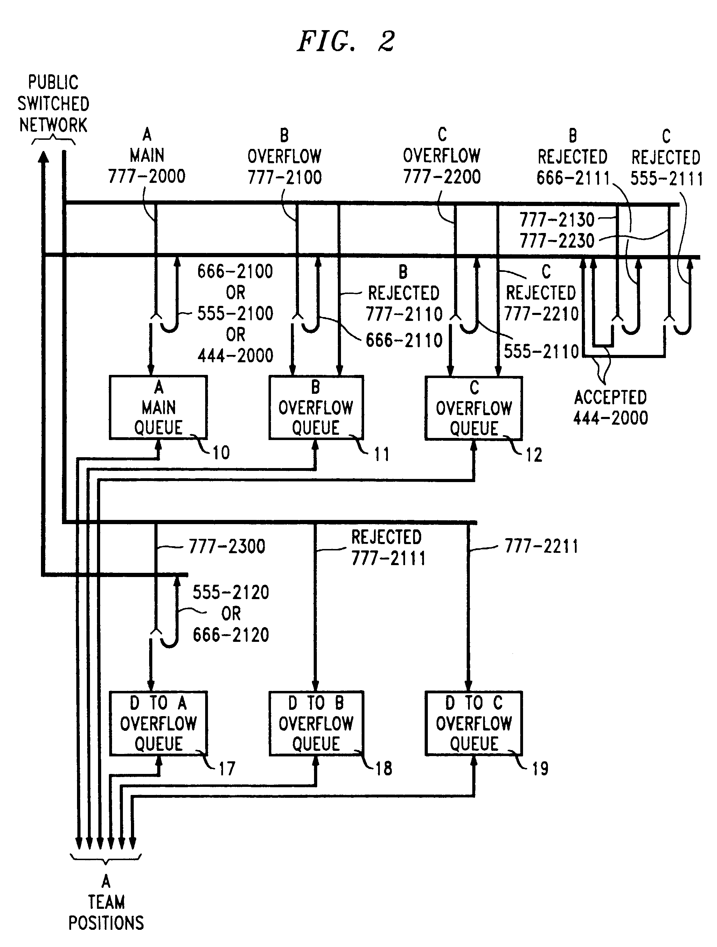

FIG. 1 shows an ACD, served by switching system (switch) 1 comprising a team of positions 20, the A team, which is one of four teams of positions that serves a particular customer. Details of which telephone number is used for which purpose are shown in FIG. 2. Two other teams, B and C, are connected via the public switched network 30 to switch 1. Team D is discussed further below. Switch 1 receives calls destined for the A team positions having one of five numbers: the main number 777-2000 for incoming traffic to the A team positions, the B team overflow number 777-2100 for traffic overflow from the B team targeted to the A team positions, the C team overflow number 777-2200 for traffic overflow from the C team targeted for the A team positions, 777-2110 for traffic originally rerouted from switch 1 but rejected by the switch controlling the B team positions, and 777-2210 for traffic originally rerouted from switch 1 but rejected from the switch controlling the C team. The latter two categories consist of calls originally having directory number 777-2000. If a call with the number 777-2000 comes into switch 1, it is examined within processor 2 comprising memory 3, of switch 1, the memory including the A main queue 10, the B overflow queue 11, and the C overflow queue 12. If the call can be served from the A team positions, then the call is entered into the A main queue 10. If not, the call is rerouted to an ACD serving center of either the B or the C team positions. In order to direct the call to the appropriate one of these ACD serving centers, the call is directed using a different number, 666-2100 and 555-2100 respectively for the B and C teams, for each such serving center. Overflow calls from the B or C centers rejected by call center A, are rerouted to the source center using directory numbers 666-2110 or 555-2110, respectively.

ACDs are well known in the prior art. The 5ESS Switch ACD is described in "5ESS Switch Pinnacle™ ACD Application Guide" and in "5ESS Switch Pinnacle™ ACD Marketing Application Guide" available from AT&T Network Systems.

The ACD is controlled by a program controlled processor 7 comprising a central processing unit (CPU) 5 and a program 6 stored in memory. Other portions of memory include block 3 which includes queues and parameters described below.

If the ACD serving center serving the A team wishes to overflow traffic to the B team positions, then it sends such traffic over the public switched network identified by a special directory number 666-2100 (comparable to the 777-2100 number in the reverse direction) to identify to the switch serving the B team that the call has been overflowed from the A team ACD. Before doing so, the overflow queue 11 for overflow traffic from the B team is examined to see if traffic can be overflowed to the ACD for the B team. A check is made of whether the number of calls in queue 11 (the queue for the B team) is equal to or less than some parameter X, stored in memory location 13. This parameter X in one specific embodiment is simply 0, i.e., calls will only be sent to alternate sites if there are no calls in the queue from a given alternate site. For other situations, a different parameter such as 1 or 2 may be used. This parameter is controllable by a system administrator of the automatic call distributor. If the number of calls in the queue for the B team ACD is less than or equal to X then the call is routed to the B team ACD, using the telephone number 666-2100. At the B team ACD, such a call, corresponding to a call to 777-2100 or 777-2200 arriving at call center A, is recognized as being a call overflowed from call center A. If that call is rejected, it is rerouted to call center A using telephone number 777-2110. Rejected phone calls are not further rerouted in this arrangement, in order to avoid any necessity for specifically identifying individual calls which is difficult if common channel signaling is not used.

If the call center B overflows traffic to call center A, the overflow traffic uses directory number 777-2100, which identifies the source as B. If the B overflow call would encounter excessive delay in call center A, the call is rejected and rerouted to call center B using directory number 666-2110, which identifies the rejected call to call center B as being a call rejected by call center A. Calls rejected from call center C are rejected using directory number 555-2110.

A management information system (MIS) 15 is attached to call center A to provide information about the load applied to and the service provided by call center A. MISs for ACDs are well known in the prior art. Performance of the group of ACDs can be monitored by sending data messages periodically among the MIS of the different members of the group. A system administrator accesses data from the MIS and controls parameters 13.

FIG. 1 also illustrates the use of queues for processing calls in the mother node (call center A) for calls overflowed from the foreign node (call center D, 33), to itself or to alternate nodes (call centers B, 31 or C, 32). The direct overflow traffic from the foreign node is identified by a special telephone number, in this case, 777-2300. Such traffic either goes directly into a D-overflow queue 17 or is stored in auxiliary queue 18 or 19 and further overflowed to call center B or call center C using directory numbers 666-2120 or 555-2120. These special numbers are used so that the call centers B and C can tell that this is traffic overflowed from the foreign node so that if they reject that traffic, they may reject it with a special telephone number and if they accept it, they will place it in an overflow queue for traffic from center D. If these call centers do reject such traffic it will be sent back by the public switched network using telephone numbers 777-2111 for overflow traffic rejected by call center B and 777-2211 for overflow traffic rejected from center C. Such rejected traffic which, it will be recalled, was originally sent to call center D, the foreign node, is stored in an auxiliary overflow queue for call center B, 18, or in an auxiliary overflow queue for call center C, 19.

The presence of call center D, the foreign node, also makes it possible for the mother node, call center A, to overflow its traffic, or overflow traffic from alternate nodes 31 and 32, using the main telephone number 444-2000 to call center D, the foreign node (33). The mother node 1 can recognize when it is possible to send its own overflow traffic to the foreign node by examining the number of entries in the D overflow queue 17 and the two auxiliary overflow queues 18 and 19. If the number of entries in all three of these queues is sufficiently small, then traffic may be overflowed to the foreign node, call center D (33). The mother node also receives calls from the alternate nodes, such as sites B and C, for overflow to the foreign node, which calls are either rejected by the mother node 1 or overflowed to the foreign node 33. The calls for overflow to the foreign node are identified by different telephone numbers, 777-2130 for calls from node 31, and 777-2230 for calls from node 32. If these calls are rejected, they are rejected with a special number, 666-2111 and 555-2111 for nodes 31 and 32, respectively, to notify these nodes that less overflow traffic should be sent to the foreign node 34 for a period of time.

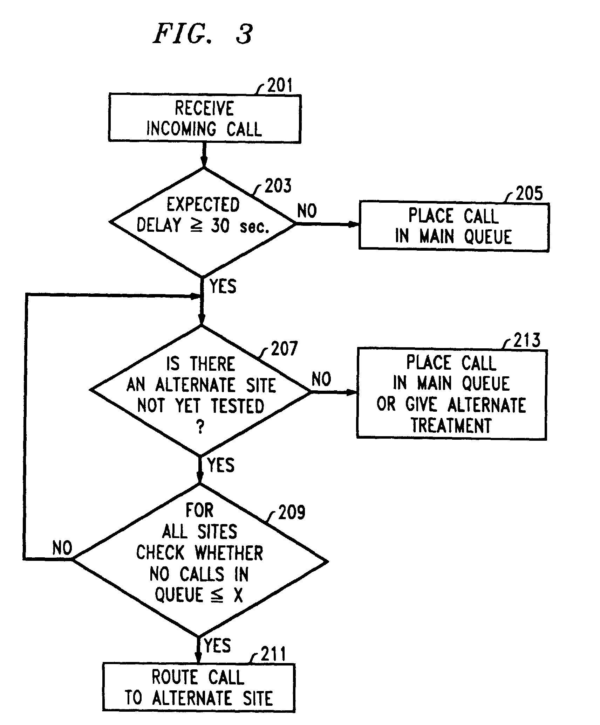

FIG. 3 illustrates the process of receiving a call. The call is received in the switch for serving the ACD (action block 201). While in this embodiment, this switch is part of a local switching system, in other embodiments it can be part of a separate PBX. Test 203 is used to determine whether the expected delay is equal to or greater than a parameter, in this example, 30 seconds. This parameter is controllable by an ACD system administrator. If not, the call is placed in the main queue (action block 205). If the delay is excessive, then the loop which includes test 207 and 209 is entered. Test 207 is used to check whether there are any alternate sites that have not yet been tested to see if traffic can be overflowed to that site. If there are untested sites, then test 209 is used to determine if the specific alternate site being tested has no more than X calls in the overflow queue for that site. If not, test 207 is reentered. If a given alternate site being tested has no more than X calls in its queue, then the incoming call is rerouted to that alternate site (action block 211).

The number X in the most straightforward implementation is 0. In this case, no traffic is overflowed to an alternate site which has traffic overflowed to this ACD. However, as experience is gathered, it may be desirable to make this number some small positive number, such as 1 or 2, especially for large ACd sites. The number is controllable by an ACD administrator. Calls are rerouted using an ACD reroute feature and a routing index. The routing index can specify a telephone number or a trunk group. Rerouting, which is well known in ACDs, differs from call forwarding in that a rerouted call can be terminated on any available agent position. The reroute feature in the Pinnacle system is called the Call Vectored Reroute feature. If the alternate site tested in test 209 has too many calls in its queue, then test 207 is reentered to try other alternate sites. After all alternate sites have been tested without finding any alternate site having sufficiently few entries in its queue, then the call is either placed in the main queue or given alternate treatment (action block 213). The alternate treatment might be busy signal or some special queue provided in the hope that the customer may be willing to wait a longer time.

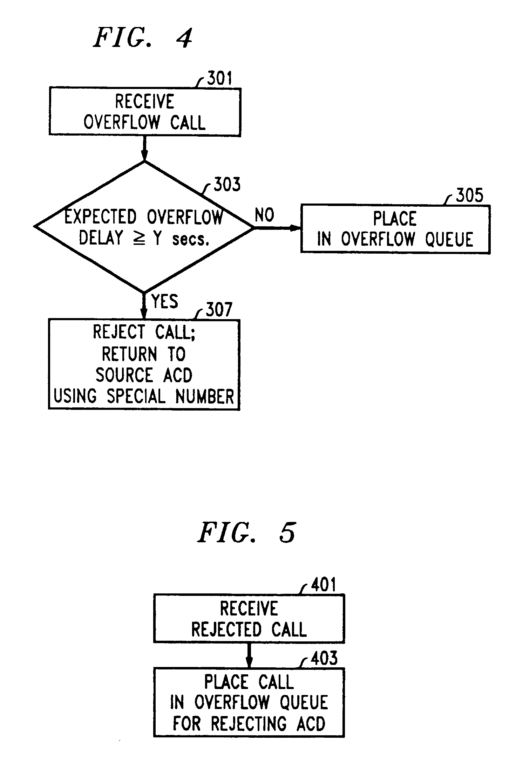

FIG. 4 is a flow diagram of actions performed in response to receiving overflow traffic from one of the other ACD serving sites. As mentioned previously, such overflow traffic is identified by a different telephone number for identifying the source. An overflow call is received and its source identified (action block 301). Test 303 determines whether the delay in handling that overflow call is likely to exceed a threshold of, for example, Y seconds. Y is a parameter stored in block 13 of memory (FIG. 1). This threshold might be 25 seconds if the threshold for the main queue is 30 seconds to account for the fact that time has elapsed in routing the call from an original main number to an overflow ACD site. If the expected delay in serving that call is less than Y seconds, then the call is placed in the overflow queue associated with the transmitting ACD serving site (action block 305). If the expected overflow delay equals or exceeds Y seconds, then the call is rejected and is returned to the source ACD serving site using a special telephone number to identify that this is a rejected call and to identify the source (action block 307).

FIG. 5 is a flow diagram describing the processing of rejected calls. If a rejected call is received and the rejecting source identified (action block 401), then the call is placed in the overflow queue for the ACD serving site that has rejected the call (action block 403). Note that block 403 corresponds to block 305, not block 301 (which uses a test before inserting the call into the queue).

In one simple implementation of applicants' invention (test 209, FIG. 3), the presence of overflow and rejected calls yields the same result, i.e., a refusal to overflow calls to the ACD serving site associated with that queue if more than X calls have been rejected by or overflowed from that site. In alternative arrangements, the decision on whether or not to use a particular alternate destination can be based on one threshold for rejected calls from that destination and a second different threshold for calls overflowed from that destination, or on some combined threshold based on different weighting of the two types of calls.

As stated above, this arrangement also processes calls which are originally received in an ACD site which has not been adapted according to the principles of the invention, i.e., a foreign node. Overflow traffic from such an ACD is received in a mother node which further distributes this traffic to other ACD sites which have not yet received an excessive amount of overflow traffic.

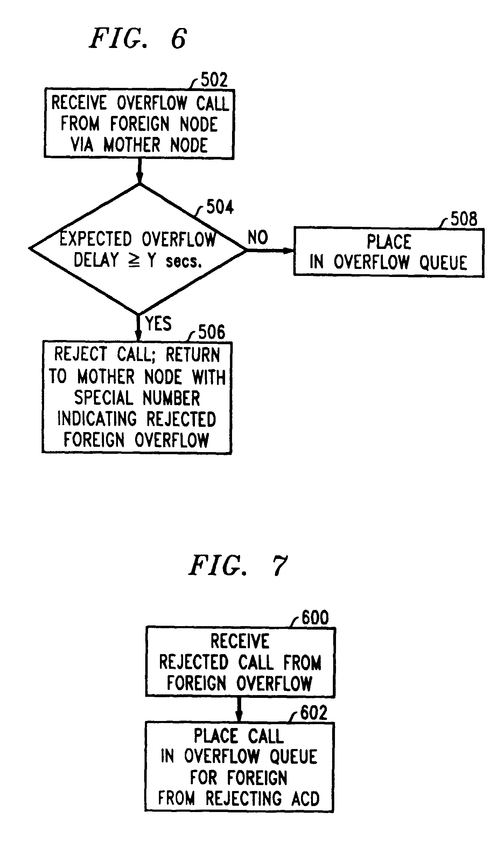

FIG. 6 illustrates the actions performed in the alternate sites such as call center B and call center C for handling traffic overflowed from the foreign node. An overflow call is received from the foreign node via the mother node (action block 502). In the alternate site a test is made to see if the expected overflow delay is equal to or greater than Y seconds (test 504). If not, the call is placed in the overflow queue for the foreign node in that alternate site. If the expected overflow is equal to or in excess of Y, then the call is rejected. It is returned over the public switched network to the mother node using a special directory number such as 777-2111 for call center B and 777-2211 for call center C in order to direct these calls to the special auxiliary overflow queues 18 or 19 for rejected traffic originally overflowed from the foreign node.

FIG. 7 illustrates the actions taken in the mother node for processing overflow traffic from the foreign node that was rejected in one of the alternate sites such as call center B or call center C. The rejected call originally overflowed from the foreign node is received (action block 600). The call is then placed in the overflow queue for overflow traffic from a foreign node for the rejecting ACD (action block 602) such as queue 18 or 19.

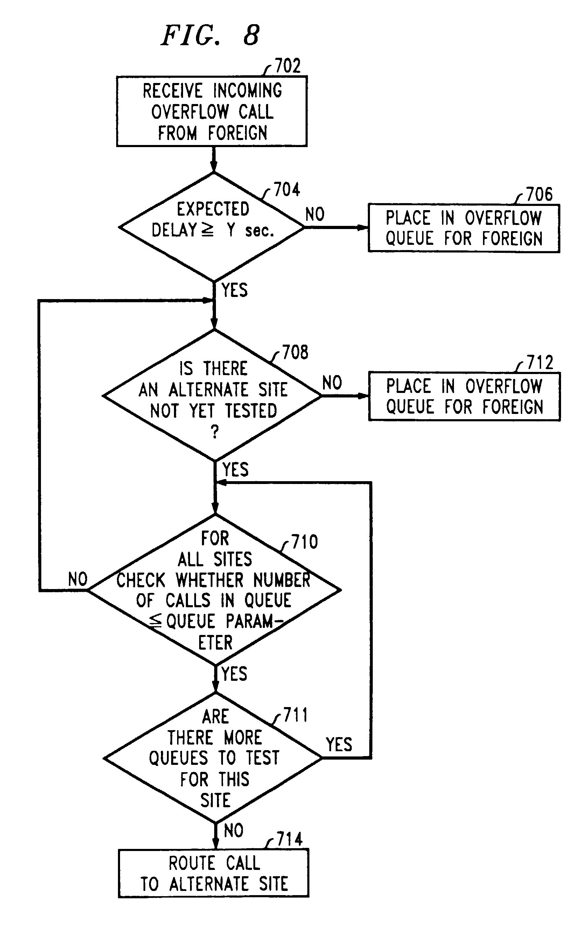

FIG. 8 illustrates the actions performed in the mother node for overflow traffic received from the foreign node. The mother node receives incoming overflow call from the foreign node (action block 702). Test 704 is used to determine whether the delay in processing such a call equals or exceeds Y seconds. If not, then the call is placed in the overflow queue for the foreign node (action block 706). If the delay is excessive, then the loop of tests 708, 710, and 711 is entered. In this loop, test 708 determines if there is an alternate site which has not yet been tested as a possible candidate for handling the overflow call from the foreign node. Test 710 is used to determine whether the number of calls in an overflow queue for that site equals or exceeds a queue parameter. If the queue parameter is not exceeded, other queues (test 711) for that alternate site are tested (test 710). If a site is found which has not yet accepted an excessive amount of overflow traffic, then the call is routed to that site (action block 714). If no such site is found, i.e, if all alternate sites have been tested and have had negative results of test 710, then the call is placed in the overflow queue of the mother node for the foreign node (action block 712). This is overflow queue 17, FIG. 1.

The order in which alternate nodes and the mother node are checked as candidates for handling the overflow traffic from the foreign node can be administered, using data in the parameters section 13 (FIG. 1) of the mother node.

Traffic rejected from the foreign node cannot be distinguished from traffic overflowed from the foreign node. This is not too important since the mother node tries to reroute the overflowed traffic anyway and such attempts for the relatively rare rejected call should not distort performance substantially. Rejected calls should be rare since the mother node would not send calls to the foreign node if the foreign node had generated a large volume of overflow traffic.

For routing traffic from an alternate site to the foreign node, the sequence of FIG. 3 is followed, since the alternate site has a queue for traffic overflowed from the foreign node to help test whether the call may be so routed. If a decision is made to route the call to the foreign node, this is done by sending the call to the mother node with the special number, such as 777-2130 or 777-2230, to signify that the call should be forwarded to the foreign node. Such a special number is easily derived from a routing index.

In an alternative embodiment, the alternate nodes can treat the mother node and the foreign node as a single entity, and the mother node can make the decision as to whether it or the foreign node should handle overflow traffic received from an alternate node.

While in this implementation, only one foreign node is shown, the same principles can be used for several foreign nodes, served by one or more mother nodes.

The priority of the overflow queues and the main queue is different in order to allow overflow queue entries to be processed more rapidly since overflow queue entries have already encountered delay before entering a queue. Techniques for giving different queues different priorities are well known in the prior art. The system administrator can alter queue performance by specifying parameters, stored in memory locations 13, for controlling the queues.

While this specific embodiment is of an Automatic Call Distributor, any other arrangement for distributing calls to serving agents, such as a Uniform Call Distributor, can also use this arrangement. This invention therefore applies to all types of call distributors (CDs).

It is to be understood that the above description is only of one preferred embodiment of the invention. Numerous other arrangements may be devised by one skilled in the art without departing from the scope of the invention. The invention is thus limited only as defined in the accompanying claims.

## Claims

1. A method of serving calls in a network having a plurality of call distributor serving centers (1,31,32), comprising the steps of:
receiving said call in one of said centers;
testing (203) whether the delay for serving said call in said one center is expected to exceed a first threshold; CHARACTERIZED BY:
responsive to determining that said first threshold is expected to be exceeded, determining (209) whether more than a first predefined number of calls have been rerouted from an alternate center; and
if more than said first predefined number of calls has not been rerouted from said alternate center, rerouting (211) said call to said alternate center.

2. A method as claimed in claim 1 comprising:
receiving (301) a rerouted call from said alternate center;
testing (303) whether delay for serving said rerouted call from said alternate center is expected to exceed a second threshold;
responsive to determining that said second threshold is expected to be exceeded, rejecting (307) said rerouted call by rerouting said rerouted call back to said alternate center.

3. A method as claimed in claim 2 wherein said one center comprises an overflow queue for storing overflow calls routed from said alternate center, and the method comprises storing (403) a rejected call from said alternate center in said overflow queue, said rejected call being a call originally rerouted from said one center to said alternate center.

4. A method as claimed in claim 1 comprising the step of:
responsive to receiving a rejected call from an alternate center, said rejected call being a call originally rerouted from said one center to said alternate center, storing an indication that calls should not be rerouted to said alternate center while said rejected call is queued for service.

5. A method as claimed in claim 1 or 2 wherein said rerouting comprises rerouting over a public switched network (30).

6. A method as claimed in claim 5 wherein said rerouting over a public switched network comprises rerouting over said network using a telephone number different from a main telephone number for said alternate center.

7. A method as claimed in claim 1 comprising the steps of:
receiving (301), in said one center a call overflowed from a second of said centers;
determining whether more than a second predefined number of calls have been rerouted to said one center from an alternate center other than said second center; and
if more than said second predefined number of calls has not been rerouted from said alternate center, rerouting said call to said alternate center.

8. A method as claimed in claim 8 comprising the step of:
responsive to receiving a rejection of said call from said alternate center, serving said call from said one center.

9. A method as claimed in claim 8 comprising the steps of:
responsive to receiving said overflowed call, testing (303) whether delay for serving said call in said one center is expected to exceed a second threshold; and
responsive to determining that said second threshold is not expected to be exceeded, serving (305) said call in said one center.

10. A method as claimed in claim 8 comprising:
receiving in said one center a call from one of said alternate centers;
determining whether more than a third predefined number of calls have been rerouted to said second center via said one center; and
if more than said third predefined number of calls has not been rerouted to said second center via said one center, rerouting said call received from said alternate center to said second center.

11. A call distributor (hereafter CD) (1) connectable to at least one other CD (31,32), comprising:
queue means (11,12) for storing calls overflowed into said CD from other CDs;
means (7,6,203) for estimating whether expected delay in serving an incoming call exceeds a threshold; CHARACTERIZED BY:
means (207,209) responsive to estimating delay exceeding said threshold for examining said queue means to identify one of said at least one other CD which has not overflowed more than a predefined number of calls to said CD; and
means (211) responsive to said examining means for rerouting said call to the identified CD.

12. A CD as claimed in claim 11 comprising:
means (301) for receiving a call rerouted from one of said at least one other CDs;
means (303) for estimating whether expected delay in serving said rerouted call exceeds another threshold; and
means (307) responsive to estimating delay exceeding said other threshold for rejecting said rerouted call by rerouting said rerouted call back to said other CD.

13. A CD as claimed in claim 12 comprising:
means responsive to receiving a rejected call for storing an indication that calls should not be rerouted to an CD that rejected said call while said rejected call is queued for service.

14. A CD as claimed in claim 11 wherein said examining means comprises means (209) for testing whether any unserved calls in said CD have been rerouted from a candidate for identification as said identified CD.

15. A CD as claimed in claim 11 wherein said means for rerouting comprises means for rerouting over a public switched network (30).

16. A CD as claimed in claim 11 comprising:
queue means (11,12) for storing calls overflowed into said CD from a second CD and other alternate CDs;
means responsive to receipt of a call overflowed from said second CD for examining said queue means to identify one of said alternate CDs which has not overflowed more than a predefined number of calls to said CD; and
means responsive to said examining means for rerouting said call to the identified alternate CD.

17. A CD as claimed in claim 16 wherein said means for examining comprises means for testing whether any unserved calls in said CD have been rerouted from a candidate for identification as said identified alternate CD.

18. A CD as claimed in claim 17 wherein said means for examining comprises means (209) for testing how many calls have been overflowed into said first CD from others of said alternate CDs.

19. A CD as claimed in claim 16 comprising:
means (203) for estimating whether the expected delay, in serving in said CD an incoming call received in said CD, exceeds the threshold;
means for examining a queue for storing calls rerouted from said second CD to said CD to determine if more than a predefined number of calls has been so rerouted; and
means responsive to a determination that said predefined number has not been rerouted for routing said incoming call to said second CD.

20. A CD as claimed in claim 16 comsprising:
means (303) for estimating whether expected delay in serving said call overflowed from said second CD exceeds a second threshold; and
means (305) responsive to said means for estimating for serving said call if said delay does not exceed said second threshold.

## Patentansprüche

1. Verfahren zur Bearbeitung von Anrufen in einem Netz mit einer Mehrzahl von Anrufverteilerbearbeitungszentralen (1, 31, 32), mit den folgenden Schritten:
Empfangen des besagten Anrufs in einer der besagten Zentralen;
Prüfen (203), ob von der Verzögerung für die Bearbeitung des besagten Anrufs in der besagten einen Zentrale erwartet wird, daß sie einen ersten Schwellenwert überschreitet; durch folgendes gekennzeichnet:
als Reaktion auf die Bestimmung, daß erwartet wird, daß der besagte erste Schwellenwert überschritten wird, Bestimmen (209), ob mehr als eine erste vordefinierte Anzahl von Anrufen von einer alternativen Zentrale aus umgeleitet wurde; und
wenn nicht mehr als die besagte erste vordefinierte Anzahl von Anrufen von der besagten alternativen Zentrale aus umgeleitet wurde, Umleiten (211) des besagten Anrufs zu der besagten alternativen Zentrale.

2. Verfahren nach Anspruch 1, mit den folgenden Schritten:
Empfangen (301) eines umgeleiteten Anrufs aus der besagten alternativen Zentrale;
Prüfen (303), ob von einer Verzögerung für die Bearbeitung des besagten umgeleiteten Anrufs aus der besagten alternativen Zentrale erwartet wird, daß sie einen zweiten Schwellenwert überschreitet;
als Reaktion auf die Bestimmung, daß erwartet wird, daß der besagte zweite Schwellenwert überschritten wird, Abweisen (307) des besagten umgeleiteten Anrufs durch Umleiten des besagten umgeleiteten Anrufs zurück zu der besagten alternativen Zentrale.

3. Verfahren nach Anspruch 2, wobei die besagte eine Zentrale eine Überlauf-Warteschlange zum Speichern von Überlaufanrufen, die von der besagten alternativen Zentrale aus geleitet werden, umfaßt, und das Verfahren das Speichern (403) eines abgewiesenen Anrufs aus der besagten alternativen Zentrale in der besagten Überlauf-Warteschlange umfaßt, wobei der besagte abgewiesene Anruf ein Anruf ist, der ursprünglich von der besagten einen Zentrale aus zu der alternativen Zentrale umgeleitet wurde.

4. Verfahren nach Anspruch 1, mit dem folgenden Schritt:
als Reaktion auf den Empfang eines abgewiesenen Anrufs aus einer alternativen Zentrale, wobei der besagte abgewiesene Anruf ein Anruf ist, der ursprünglich von der besagten einen Zentrale aus zu der alternativen Zentrale umgeleitet wurde, Speichern einer Anzeige, daß Anrufe nicht zu der besagten alternativen Zentrale umgeleitet werden sollten, während der besagte abgewiesene Anruf für die Bearbeitung in eine Warteschlange eingereiht wird.

5. Verfahren nach Anspruch 1 oder 2, wobei das besagte Umleiten das Umleiten über ein öffentliches Wählnetz (30) umfaßt.

6. Verfahren nach Anspruch 5, wobei das besagte Umleiten über ein öffentliches Wählnetz die Umleitung über das besagte Netz unter Verwendung einer von einer Hauptrufnummer für die besagte alternative Zentrale verschiedenen Rufnummer umfaßt.

7. Verfahren nach Anspruch 1, mit den folgenden Schritten:
Empfangen (301), in der besagten einen Zentrale, eines aus einer zweiten der besagten Zentralen übergelaufenen Anrufs;
Bestimmen, ob mehr als eine zweite vordefinierte Anzahl von Anrufen von einer von der besagten zweiten Zentrale verschiedenen alternativen Zentrale aus zu der besagten einen Zentrale umgeleitet wurde; und
wenn nicht mehr als die besagte zweite vordefinierte Anzahl von Anrufen von der besagten alternativen Zentrale aus umgeleitet wurde, Umleiten des besagten Anrufs zu der besagten alternativen Zentrale.

8. Verfahren nach Anspruch 8, mit dem folgenden Schritt:
als Reaktion auf den Empfang einer Abweisung des besagten Anrufs aus der besagten alternativen Zentrale, Bearbeiten des besagten Anrufs von der besagten einen Zentrale aus.

9. Verfahren nach Anspruch 8, mit den folgenden Schritten:
als Reaktion auf den Empfang des besagten übergelaufenen Anrufs, Prüfen (303), ob von einer Verzögerung für die Bearbeitung des besagten Anrufs in der besagten einen Zentrale erwartet wird, daß sie einen zweiten Schwellenwert überschreitet; und
als Reaktion auf die Bestimmung, daß nicht erwartet wird, daß der besagte zweite Schwellenwert überschritten wird, Bearbeiten (305) des besagten Anrufs in der besagten einen Zentrale.

10. Verfahren nach Anspruch 8, mit den folgenden Schritten:
Empfangen, in der besagten einen Zentrale, eines Anrufs aus einer der besagten alternativen Zentralen;
Bestimmen, ob mehr als eine dritte vordefinierte Anzahl von Anrufen über die besagte eine Zentrale zu der besagten zweiten Zentrale umgeleitet wurde; und
wenn nicht mehr als die besagte dritte vordefinierte Anzahl von Anrufen über die besagte eine Zentrale zu der besagten zweiten Zentrale umgeleitet wurde, Umleiten des besagten aus der besagten alternativen Zentrale empfangenen Anrufs zu der besagten zweiten Zentrale.

11. Anrufverteiler (der im folgenden CD genannt wird) (1), verbindbar mit mindestens einem weiteren CD (31, 32), mit folgendem:
Warteschlangenmitteln (11, 12) zum Speichern von Anrufen, die aus anderen CDs in den besagten CD übergelaufen sind;
Mitteln (7, 6, 203) zum Abschätzen, ob eine erwartete Verzögerung bei der Bearbeitung eines ankommenden Anrufs einen Schwellenwert überschreitet; gekennzeichnet durch:
Mitteln (207, 209), die auf die Abschätzung reagieren, daß eine Verzögerung den besagten Schwellenwert überschreitet, zum Untersuchen der besagten Warteschlangenmittel, um einen der besagten mindestens einen weiteren CD zu identifizieren, der nicht mehr als eine vordefinierte Anzahl von Anrufen zu dem besagten CD überlaufen lassen hat; und
einem Mittel (211), das auf das besagte Untersuchungsmittel reagiert, zur Umleitung des besagten Anrufs zu dem identifizierten CD.

12. CD nach Anspruch 11, mit folgendem:
einem Mittel (301) zum Empfangen eines aus einem der besagten mindestens einen weiteren CDs umgeleiteten Anrufs;
einem Mittel (303) zum Abschätzen, ob eine erwartete Verzögerung bei der Bearbeitung des besagten umgeleiteten Anrufs einen weiteren Schwellenwert überschreitet; und
einem Mittel (307), das auf die Abschätzung reagiert, daß eine Verzögerung den besagten weiteren Schwellenwert überschreitet, zum Abweisen des besagten umgeleiteten Anrufs durch Umleiten des besagten umgeleiteten Anrufs zurück zu dem besagten anderen CD.

13. CD nach Anspruch 12, mit folgendem:
einem Mittel, das auf den Empfang eines abgewiesenen Anrufs reagiert, zum Speichern einer Anzeige, daß Anrufe nicht zu einem CD umgeleitet werden sollten, der den besagten Anruf abgewiesen hat, während der besagte abgewiesene Anruf für die Bearbeitung in eine Warteschlange eingereiht wird.

14. CD nach Anspruch 11, wobei das besagte Untersuchungsmittel ein Mittel (209) zum Prüfen umfaßt, ob etwaige unbearbeitete Anrufe in dem besagten CD von einem Kandidaten für die Identifizierung als der besagte identifizierte CD aus umgeleitet wurden.

15. CD nach Anspruch 11, wobei das besagte Mittel zum Umleiten ein Mittel zum Umleiten über ein öffentliches Wählnetz (30) umfaßt.

16. CD nach Anspruch 11, mit folgendem:
Warteschlangenmitteln (11, 12) zum Speichern von Anrufen, die aus einem zweiten CD und anderen alternativen CDs in den besagten CD übergelaufen sind;
einem Mittel, das auf den Empfang eines aus dem besagten zweiten CD übergelaufenen Anrufs reagiert, zum Untersuchen des besagten Warteschlangenmittels zum Identifizieren eines der alternativen CDs, der nicht mehr als eine vordefinierte Anzahl von Anrufen zu dem besagten CD überlaufen lassen hat; und
einem Mittel, das auf das besagte Untersuchungsmittel reagiert, zur Umleitung des besagten Anrufs zu dem identifizierten alternativen CDs.

17. CD nach Anspruch 16, wobei das besagte Mittel zum Untersuchen ein Mittel zum Prüfen umfaßt, ob etwaige unbearbeitete Anrufe in dem besagten CD von einem Kandidaten für die Identifizierung als der besagte identifizierte CD aus umgeleitet wurden.

18. CD nach Anspruch 17, wobei das besagte Mittel zum Untersuchen ein Mittel (209) zum Prüfen umfaßt, wieviele Anrufe von anderen der alternativen CDs aus in den besagten ersten CD überlaufen gelassen wurden.

19. CD nach Anspruch 16, mit folgendem:
einem Mittel (203) zum Abschätzen, ob die erwartete Verzögerung bei der Bearbeitung, in dem besagten CD, eines in dem besagten CD empfangenen ankommenden Anrufs den zweiten Schwellenwert überschreitet;
einem Mittel zur Untersuchung einer Warteschlange zum Speichern von aus dem besagten zweiten CD zu dem besagten CD umgeleiteten Anrufen zur Bestimmung, ob mehr als eine vordefinierte Anzahl von Anrufen dergestalt umgeleitet wurde; und
einem Mittel, das auf eine Bestimmung reagiert, daß nicht die besagte vordefinierte Anzahl umgeleitet wurde, zum Leiten des besagten ankommenden Anrufs zu dem besagten zweiten CD.

20. CD nach Anspruch 16, mit folgendem:
einem Mittel (303) zum Abschätzen, ob eine erwartete Verzögerung bei der Bearbeitung des besagten aus dem besagten zweiten CD übergelaufenen Anrufs einen zweiten Schwellenwert überschreitet; und
einem Mittel (305), das auf das besagte Mittel zum Abschätzen reagiert, zur Bearbeitung des besagten Anrufs, wenn die besagte Verzögerung den besagten zweiten Schwellenwert nicht überschreitet.

## Revendications

1. Procédé de traitement d'appels dans un réseau comportant une pluralité de centres de distribution d'appels (1,31,32), comprenant les étapes de :
réception dudit appel dans l'un desdits centres ;
test (203) si le retard de traitement dudit appel dans ledit centre est susceptible de dépasser un premier seuil ; CARACTERISE PAR :
en réponse à la détermination que ledit premier seuil est susceptible d'être dépassé, détermination (209) si plus d'un premier nombre prédéfini d'appels ont été réacheminés depuis un autre centre ; et
si plus que ledit premier nombre prédéfini d'appels n'ont pas été réacheminés depuis ledit autre centre, réacheminement (211) dudit appel vers ledit autre centre.

2. Procédé selon la revendication 1, comprenant les :
réception (301) d'un appel réacheminé depuis ledit autre centre ;
test (303) si le retard de traitement dudit appel réacheminé depuis ledit autre centre est susceptible de dépasser un deuxième seuil ;
en réponse à la détermination que ledit deuxième seuil est susceptible d'être dépassé, rejet (307) dudit appel réacheminé en réacheminant ledit appel réacheminé en retour vers ledit autre centre.

3. Procédé selon la revendication 2, dans lequel ledit centre comprend une file d'attente de débordement pour mémoriser les appels de débordement acheminés depuis ledit autre centre, et le procédé comprend la mémorisation (403) d'un appel rejeté par ledit autre centre dans ladite file d'attente de débordement, ledit appel rejeté étant un appel originellement réacheminé depuis ledit centre vers ledit autre centre.

4. Procédé selon la revendication 1, comprenant l'étape de :
en réponse à la réception d'un appel rejeté par un autre centre, ledit appel rejeté étant un appel initialement réacheminé depuis ledit centre vers ledit autre centre, mémorisation d'une indication que les appels ne devraient pas être réacheminés vers ledit autre centre pendant que ledit appel rejeté est mis en file d'attente pour être traité.

5. Procédé selon la revendication 1 ou 2, dans lequel ledit réacheminement comprend le réacheminement sur un réseau commuté public (30).

6. Procédé selon la revendication 5, dans lequel ledit réacheminement sur un réseau commuté public comprend le réacheminement sur ledit réseau en utilisant un numéro de téléphone différent d'un numéro de téléphone principal dudit autre centre.

7. Procédé selon la revendication 1, comprenant les étapes de :
réception (301) dans ledit centre d'un appel ayant débordé d'un deuxième desdits centres ;
détermination si plus d'un deuxième nombre prédéfini d'appels ont été réacheminés vers ledit centre depuis un autre centre autre que ledit deuxième centre ; et
si plus que ledit deuxième nombre prédéfini d'appels n'ont pas été réacheminés depuis ledit autre centre, réacheminement dudit appel vers ledit autre centre.

8. Procédé selon la revendication 8, comprenant l'étape de :
en réponse à la réception d'un rejet dudit appel par ledit autre centre, traitement dudit appel provenant dudit centre.

9. Procédé selon la revendication 8, comprenant les étapes de :
en réponse à la réception dudit appel de débordement, test (303) si le retard de traitement dudit appel dans ledit centre est susceptible de dépasser un deuxième seuil ; et
en réponse à la détermination que ledit deuxième seuil n'est pas susceptible d'être dépassé, traitement (305) dudit appel dans ledit centre.

10. Procédé selon la revendication 8, comprenant :
la réception dans ledit centre d'un appel provenant de l'un desdits autres centres ;
la détermination si plus d'un troisième nombre prédéfini d'appels ont été réacheminés vers ledit deuxième centre par l'intermédiaire dudit centre ; et
si plus que ledit troisième nombre prédéfini d'appels n'ont pas été réacheminés vers ledit deuxième centre par l'intermédiaire dudit centre, réacheminement dudit appel reçu depuis ledit autre centre vers ledit deuxième centre.

11. Distributeur d'appels (ci-après DA) (1) connectable à au moins un autre DA (31, 32), comprenant :
un moyen de file d'attente (11, 12) pour mémoriser les appels ayant débordé dans ledit DA depuis d'autres DA ;
un moyen (7, 6, 203) pour estimer si le retard prévu du traitement d'un appel entrant dépasse un seuil ; CARACTERISE PAR :
un moyen (207, 209) sensible à l'estimation du retard dépassant ledit seuil pour examiner ledit moyen de file d'attente en vue d'identifier l'un desdits au moins un autre DA qui n'a pas débordé par plus d'un nombre prédéfini d'appels dans ledit DA ; et
un moyen (211) sensible audit moyen d'examen pour réacheminer ledit appel vers ledit DA identifié.

12. DA selon la revendication 11, comprenant :
un moyen (301) pour recevoir un appel réacheminé depuis un desdits au moins un autre DA ;
un moyen (303) pour estimer si le retard prévu de traitement dudit appel réacheminé dépasse un autre seuil ; et
un moyen (307) sensible à l'estimation du retard dépassant ledit autre seuil pour rejeter ledit appel réacheminé en réacheminant ledit appel réacheminé de retour vers ledit autre DA.

13. DA selon la revendication 12, comprenant :
un moyen sensible à la réception d'un appel rejeté pour mémoriser une indication que les appels ne devraient pas être réacheminés à un DA qui a rejeté ledit appel pendant que ledit appel rejeté est mis en file d'attente pour être traité.

14. DA selon la revendication 11, dans lequel ledit moyen d'examen comprend un moyen (209) pour tester si des appels non traités dans ledit DA ont été réacheminés depuis un candidat objet de l'identification en tant que dit DA identifié.

15. DA selon la revendication 11, dans lequel ledit moyen de réacheminement comprend un moyen de réacheminement sur un réseau commuté public (30).

16. DA selon la revendication 11, comprenant :
un moyen de file d'attente (11, 12) pour mémoriser les appels ayant débordé dans ledit DA depuis un deuxième DA et d'autres DA ;
un moyen sensible à la réception d'un appel ayant débordé dudit deuxième DA pour examiner ledit moyen de file d'attente en vue d'identifier un desdits autres DA qui n'a pas débordé par plus d'un nombre prédéfini d'appels dans ledit DA ; et
un moyen sensible audit moyen d'examen pour réacheminer ledit appel vers ledit autre DA identifié.

17. DA selon la revendication 16, dans lequel ledit moyen d'examen comprend un moyen pour tester si des appels non traités dans ledit DA ont été réacheminés depuis un candidat objet de l'identification en tant que dit autre DA identifié.

18. DA selon la revendication 17, dans lequel ledit moyen d'examen comprend un moyen (209) pour tester le nombre d'appels ayant débordé dans ledit premier DA depuis d'autres desdits autres DA.

19. DA selon la revendication 16, comprenant :
un moyen (203) pour estimer si le retard prévu, de traitement dans ledit DA d'un appel entrant reçu dans ledit DA, dépasse le deuxième seuil ;
un moyen pour examiner une file d'attente pour mémoriser les appels réacheminés depuis ledit deuxième DA vers ledit DA en vue de déterminer si plus d'un nombre prédéfini d'appels ont été ainsi réacheminés ; et
un moyen sensible à une détermination que ledit nombre prédéfini n'a pas été réacheminé pour acheminer ledit appel entrant vers ledit deuxième DA.

20. DA selon la revendication 16, comprenant :
un moyen (303) pour estimer si le retard prévu de traitement dudit appel ayant débordé depuis ledit deuxième DA dépasse un deuxième seuil ; et
un moyen (305) sensible audit moyen d'estimation pour traiter ledit appel si ledit retard ne dépasse pas ledit deuxième seuil.
